# EUROPÄISCHE PATENTSCHRIFT

(11) **EP 0 681 643 B1**
(45) Veröffentlichungstag und Bekanntmachung des Hinweises auf die Patenterteilung: **10.07.1996**
(21) Anmeldenummer: 94905079.3
(22) Anmeldetag: 18.01.1994
(51) Int. Cl.: F01N 3/20, F01N 3/28, B01J 35/04

(54) **KATALYTISCHER KONVERTER MIT ELEKTRISCHER BEHEIZUNG**
ELECTRICALLY HEATED CATALYTIC CONVERTER
CONVERTISSEUR CATALYTIQUE CHAUFFE ELECTRIQUEMENT

(30) Priorität: 26.01.1993 DE 4302039
(43) Veröffentlichungstag der Anmeldung: 15.11.1995
(73) Patentinhaber: Emitec Gesellschaft für Emissionstechnologie mbH, D-53797 Lohmar (DE)
(72) Erfinder: SWARS, Helmut, D-51429 Bergisch Gladbach (DE); BRÜCK, Rolf, D-51429 Bergisch Gladbach (DE)
(74) Vertreter: Kahlhöfer, Hermann, Dipl.-Phys.
(86) Internationale Anmeldenummer: EP9400115
(87) Internationale Veröffentlichungsnummer: WO9417290

(56) Entgegenhaltungen:
- WO-A-92/13635
- WO-A-92/13636
- DE-A- 4 131 970
- PATENT ABSTRACTS OF JAPAN vol. 17, no. 584 (M-1501)25. Oktober 1993 & JP,A,05 171 928 (TOYOTA) 9. Juli 1993

## Beschreibung

Die vorliegende Erfindung betrifft einen katalytischen Konverter mit elektrischer Beheizung, umfassend ein Gehäuse, in welchem mindestens eine von einem Abgas eines Verbrennungsmotors in einer Strömungsrichtung durchströmbare Wabenkörperanordnung enthalten ist, die zumindest in Teilbereichen elektrisch leitfähig und beheizbar ist und die zumindest in Teilbereichen eine katalytisch aktive Beschichtung aufweist.

Katalytische Konverter mit elektrischer Beheizung sind beispielsweise in der US-PS 5,146,743 beschrieben. Eine weiterentwickelte Bauform, von der die vorliegende Erfindung ausgeht, ist in der WO 92/02714 beschrieben. Weiterhin ist es bekannt, die in elektrisch beheizbaren katalytischen Konvertern verwendeten Wabenkörper inhomogen zu beheizen. Hierzu wird in der WO 92/13635 vorgeschlagen, die in dem Wabenkörper verwendeten metallischen Folien mit Schlitzen oder Löchern zu versehen, um die Stromverteilung zu beeinflussen.

Die bekannten Bauformen für elektrisch beheizbare Wabenkörper eignen sich zwar prinzipiell für die meisten Anwendungsfälle, jedoch ist es schwierig, für unterschiedliche vorgegebene Randbedingungen standardisierte Bautypen zu schaffen, die mechanisch stabil sind und gleichzeitig die elektrischen und thermodvnamischen Anforderungen erfüllen.

Es hat sich gezeigt, daß elektrisch beheizbare katalytische Konverter praktisch an jeden Fahrzeugtyp angepaßt werden müssen, um optimale Ergebnisse zu erreichen. Dabei muß zunächst eirimal die maximal zur Beheizung zur Verfügung stehende Stromstärke berücksichtigt werden, wonach sich der elektrische Widerstand des Wabenkörpers bei vorgegebener Versorgungsspannung (meist 8 bis 12 Volt) richten muß. Da ein elektrisch beheizbarer Wabenkörper möglichst dicht vor einem nachfolgenden nicht beheizbaren katalytischen Konverter, beispielsweise einem Vorkatalysator oder einem Hauptkatalysator angeordnet werden soll, muß der Durchmesser des elektrisch beheizbaren Wabenkörpers an diese Gegebenheiten angepaßt werden. Weiter kommt es auch auf die zur Verfügung stehende Heizfläche im Verhältnis zur beheizten Masse an, so daß es wünschenswert ist, dieses Verhältnis in einem weiten Bereich variieren zu können. Gerade dies ist bei den bekannten Bautypen bei festgelegtem Widerstand und festgelegtem Durchmesser sehr schwierig. Insbesondere würden bestimmte Randbedingungen axial sehr kurze beheizbare Wabenkörper erfordern, welche mechanisch nicht stabil genug sind, vor allem nicht gegenüber in Kraftfahrzeugen auftretenden Schwingungen.

Aufgabe der vorliegenden Erfindung ist daher die Schaffung eines katalytischen Konverters mit elektrischer Beheizung, welcher sich bezüglich seiner Maße standardisieren läßt, trotzdem aber die Anpassung an vorgegebene Randbedingungen in weiten Bereichen ermöglicht. Dabei soll das Verhältnis von Heizfläche zu beheizter Masse einstellbar sein und auch das Verhältnis zwischen geheizten Flächen und katalytisch wirksamen Flächen soll variabel sein.

Zur Lösung dieser Aufgabe dient ein katalytischer Konvener mit elektrischer Beheizung, umfassend ein Gehäuse, in welchem mindestens ein von einem Abgas eines Verbrennungmotors in einer Strömungsrichtung durchströmbarer Wabenkörper enthalten ist, der zumindest in Teilbereichen elektrisch leitfähig und durch einen elektrischen Strom beheizbar ist und der zumindest in Teilbereichen eine katalytisch aktive Beschichtung aufweist, wobei der Wabenkörper mindestens zwei in Durchströmungsrichtung hintereinander liegende elektrisch beheizbare Teilbereiche mit unterschiedlicher axialer Länge und/oder unterschiedlichem elektrischen Widerstand aufweist, welche voneinander durch einen für den elektrischen Strom zumindest nahezu gesperrten Teilbereich des Wabenkörpers getrennt sind. Die Erfindung geht von der Tatsache aus, daß eine katalytische Umsetzung in einen katalytischen Konverter erst ab Temperaturen von etwa 300 bis 450° C in nennenswertem Umfange stattfindet. Heizt man daher einen großen Wabenkörper langsam auf, so findet zunächst nirgendwo eine katalytische Umsetzung statt. Heizt man statt dessen nur einen axial sehr kurzen Bereich mit kleiner beheizter Masse schnell auf, so setzt dort die katalytische Umsetzung frühzeitig ein. Voraussetzung dafür ist, daß die Oberfläche dieses Bereiches im Verhältnis zur Heizleistung und zum Massendurchsatz des in der Kaltstartphase noch kalten Abgases nicht zu groß ist. In dem schnell aufgeheizten Bereich setzt eine exotherme Reaktion ein, welche die im Abgas während der Kaltstartphase enthaltene chemische Energie zur Aufheizung des katalytischen Konverters mit aktiviert. Die in den schnell aufgeheizten Bereich eingespeiste elektrische Energie und die dort umgesetzte chemische Energie heizen das Abgas und direkt anschließende Teilbereiche des katalytischen Konverters mit auf, jedoch fällt die Temperatur vom Ende des beheizten Bereiches an wieder ab, da der nachfolgende Teil des katalytischen Konverters als Wäremesenke fungiert. Ein kurzes Stück hinter dem beheizten Bereich fällt daher die Temperatur wieder unter 300° C, so daß eine katalytische Umsetzung nicht mehr erfolgt. Erfindungsgemäß wird dort ein weiterer beheizbarer Teilbereich vorgesehen, um die Temperatur wieder in einen für eine katalytische Umsetzung geeigneten Bereich anzuheben. Während jedoch der erste beheizbare Teilbereich das Abgas von beispielsweise 150 auf 450° C aufheizen muß, muß der zweite beheizbare Teilbereich die Temperatur nur von beispielsweise 300 auf 450° C anheben. Es ist unmittelbar einsichtig, daß hierfür eine geringere elektrische Leistung erforderlich ist als in dem ersten beheizbaren Bereich eingesetzt werden muß. Der zweite beheizbare Teilbereich sollte daher einen höheren Widerstand als der erste beheizbare Teilbereich haben, was entweder durch einen anderen Aufbau oder durch eine kürzere axiale Länge erreicht werden kann.

Besonders günstig ist es, wenn der erste elektrisch beheizbare Teilbereich die zwei- bis vierfache axiale Länge des zweiten elektrischen Teilbereiches aufweist. Dies geht, wenn der Aufbau ansonsten in beiden Teilbereichen gleich ist, mit einer Erhöhung des Widerstandes im zweiten Teilbereich auf den zwei- bis vierfachen Wert einher.

Für die mechanische Festigkeit der Wabenkörperanordnung ist es günstig, wenn zwischen den elektrisch beheizbaren Teilbereichen zumindest ein nicht direkt beheizbarer Teilbereich angeordnet ist. Um dessen Fläche für die katalytische Umsetzung ausnutzen zu können, sollte dieser Teilbereich mit einer katalytisch aktiven Beschichtung versehen sein. Obwohl dieser Bereich nicht direkt beheizbar ist, wird er doch von den beiden direkt elektrisch beheizbaren Teilbereichen mit aufgeheizt, so daß dieser Teilbereich mit zur katalytischen Umsetzung beiträgt.

Zur Einhaltung strenger Umweltschutzgesetze ist ein schnelles Einsetzen der katalytischen Konvertierung erforderlich, weshalb der erste elektrisch beheizbare Teilbereich bezüglich seiner axialen Länge, seines elektrischen Widerstandes, seiner Masse und seiner Oberfläche so gestaltet ist, daß er bei einer vorgegebenen Versorgungsspannung, beispielsweise 8 bis 12

Volt, im Abgasstrom des Verbrennungsmotors während einer Kaltstartphase innerhalb von 3 bis 5 Sekunden auf etwa 450° C aufgeheizt wird. Wie weiter unten anhand von Ausführungsbeispielen noch näher erklärt wird, erlaubt die erfindungsgemäße Bauform immer die Einhaltung dieser Bedingung bei trotzdem mechanisch stabilem Aufbau.

Der hinter dem ersten elektrisch beheizbaren Teilbereich liegende, nicht direkt beheizbare Teilbereich sollte außerdem eine solche axiale Länge, Masse und Oberfläche aufweisen, daß der Temperaturabfall während einer Kaltstartphase des Verbrennungsmotors über die axiale Länge dieses Teilbereiches unter Berücksichtigung von exothermen Reaktionen nur etwa 50 bis 150° C bei einer Eintrittstemperatur von 450° C ist. Bei einer solchen Ausgestaltung trägt praktisch der ganze nicht direkt beheizbare Teilbereich trotzdem sehr früh zur katalytischen Umsetzung bei und vermindert so den Schadstoffausstoß während der Kaltstartphase.

Der zweite elektrisch beheizbare Teilbereich wird bezüglich seiner axialen Länge, seines elektrischen Widerstandes, seiner Masse und seiner Oberfläche bevorzugt so gestaltet, daß er bei einer vorgegebenen Versorgungsspannung während einer Kaltstartphase des Verbrennungsmotors bei einer Eintrittstemperatur von 400° C unter Berücksichtigung von exothermen Reaktionen in diesem Teilbereich eine Temperaturerhöhung von 50 bis 150° C bewirkt.

An den zweiten elektrisch beheizbaren Teilbereich kann sich ein weiterer Teilbereich mit katalytisch aktiver Beschichtung anschließen, der dann ebenfalls frühzeitig zur katalytischen Umsetzung beiträgt. Prinzipiell können sich weitere elektrisch beheizbare und nicht beheizbare Teilbereiche anschließen, deren Wirkung jeweils den vorbeschriebenen Wirkungen entspricht. Besonders günstig ist es natürlich, wenn die ganze Wabenkörperanordnung, d.h. sowohl die beheizbaren wie die nicht beheizbaren Teilbereiche mit katalytisch aktivem Material beschichtet sind.

Prinzipiell ist es möglich, daß jeder Teilbereich der Wabenkörperanordnung aus einem gesonderten Wabenkörper besteht, welche hintereinander angeordnet sind. Bevorzugt wird jedoch erfindungsgemäß eine Wabenkörperanordnung, die aus einem einzigen Wabenkörper besteht, der aus strukturierten Blechlagen zusammengesetzt und in mindestens drei axial hintereinander liegende Teilbereiche unterteilt ist, nämlich einen ersten elektrisch beheizbaren Teilbereich, einen daran anschließenden durch eine Vielzahl von Schlitzen in den Blechlagen elektrisch zumindest in einer Richtung nicht durchgehend leitenden und daher nicht direkt beheizbaren Teilbereich und einen daran anschließenden zweiten elektrisch beheizbaren Teilbereich. Diese Anordnung ist besonders einfach und preisgünstig herstellbar und mechanisch besonders stabil. Anders als beim Stand der Technik bekannt, werden hier die Schlitze zur vollständigen Verhinderung eines Stromflusses in einem Teilbereich eingesetzt, wobei die Schlitze quer oder im Winkel zur Richtung des elektrischen Potentials liegen, so daß in den Blechbereichen zwischen den Schlitzen kein elektrischer Strom fließt.

Bei den meisten bekannten Bauformen für elektrisch beheizbare Wabenkörper, beispielsweise den in der WO 92/02714 beschriebenen, bedeutet dies, daß die Schlitze etwa in Strömungsrichtung oder im spitzen Winkel dazu verlaufen, wodurch ein elektrischer Stromfluß quer zur Strömungsrichtung verhindert wird. Die axiale Stabilität des Teilbereiches bleibt jedoch erhalten, da die Schlitze diese Stabilität praktisch nicht beeinflussen. Die beheizbaren Teilbereiche werden so axial stabil miteinander verbunden, daß der Körper eine hohe axiale mechanische Festigkeit aufweist, auch wenn die elektrisch beheizbaren Teilbereiche axial sehr kurz sind. Für die axiale Stabilität wären exakt parallel zur Strömungsrichtung verlaufende Schlitze am günstigsten, jedoch verhalten sich geringfügig schräg zur Strömungsrichtung verlaufende Schlitze beim Biegen und insbesondere beim Wellen von Stahlblechen günstiger, so daß diese Form bevorzugt wird.

Wie anhand der Ausführungsbeispiele noch näher erläutert wird, ist für viele Anwendungsfälle eine axiale Länge aller elektrisch beheizbaren Bereiche zusammen zwischen 4 und 20 mm, vorzugsweise 6 bis 16 mm, günstig. Dabei liegt die axiale Länge des ersten elektrisch beheizbaren Teilbereiches zwischen 2 und 10 mm, vorzugsweise bei etwa 6 mm. Als geeigneter Bereich für den Durchmesser der Wabenkörperanordnung hat sich 75 bis 105 mm, vorzugsweise etwa 90 mm als günstig gezeigt.

Die axiale Gesamtlänge der Wabenkörperanordnung sollte zur Erzielung einer genügenden mechanischen Stabilität zwischen 12 und 40 mm liegen, vorzugsweise bei etwa 25 mm.

Die Erfindung kann nicht nur durch aus einzelnen Blechen aufgebaute Wabenkörper verwirklicht werden, sondern auch beispielsweise durch einen einzigen extrudierten Wabenkörper, der in axial hintereinander liegende Teilbereiche mit in Strömungsrichtung zunehmendem elektrischem Widerstand unterteilt ist. Es ist bekannt, elektrisch leitfähige Wabenkörper aus Metallpulver oder einer Mischung aus Keramik- und Metallpulver durch Extrudieren herzustellen, wobei der elektrische Widerstand durch das Mischungsverhältnis zwischen Metall- und Keramikpulver einstellbar ist. Auch kann der Widerstand in einzelnen Bereichen eines solchen Wabenkörpers durch eine nachträgliche Behandlung, beispielsweise Oxidieren oder Ätzen beeinflußt werden, so daß Teilbereiche mit unterschiedlichem elektrischem Widerstand leicht herstellbar sind.

Daher kann auch ein extrudierter Wabenkörper drei axial hintereinander liegende Teilbereiche aufweisen, nämlich einen ersten elektrisch leitfähigen und beheizbaren Teilbereich, einen daran anschließenden elektrisch schlecht leitfähigen und daher nicht direkt beheizbaren Teilbereich und einen daran anschließenden zweiten elektrisch leitfähigen und beheizbaren Teilbereich. Die Wirkung dieser Teilbereiche entspricht den oben beschriebenen Wirkungen.

Bevorzugt besteht der extrudierte Wabenkörper in den gut leitenden Teilbereichen vorwiegend aus metallischem Material und in den schlecht leitenden Bereichen vorwiegend aus keramischem Material oder metallischem Material hoher Porösität. Ein solcher Wabenkörper kann auch aus fünf Teilbereichen bestehen, von denen entweder drei oder zwei elektrisch direkt beheizbar sind.

Ausführungsbeispiele der vorliegenden Erfindung, auf die diese jedoch nicht beschränkt ist, werden im folgenden anhand der Zeichnung näher erläutert. In der Zeichnung zeigen
- Fig. 1: einen Längsschnitt durch einen Teil eines Abgassystems bei einem Kraftfahrzeug mit einer erfindungsgemäßen Wabenkörperanordnung und einem direkt dahinter angeordneten Vorkatalysator
- Fig. 2, 3 u. 4: schematisch in axial gespreitzter Form den Temperaturverlauf während der Beheizung in einer Kaltstartphase (Fig. 2), den Aufbau einer erfindungsgemäßen Katalysatoranordnung (Fig. 3) und ein Stück eines Blechbandes (Fig. 4), welches für eine erfindungsgemäße Wabenkörperanordnung geeignet ist und
- Fig. 5: schematisch im Längsschnitt den Aufbau eines extrudierten Wabenkörpers mit drei Teilbereichen.

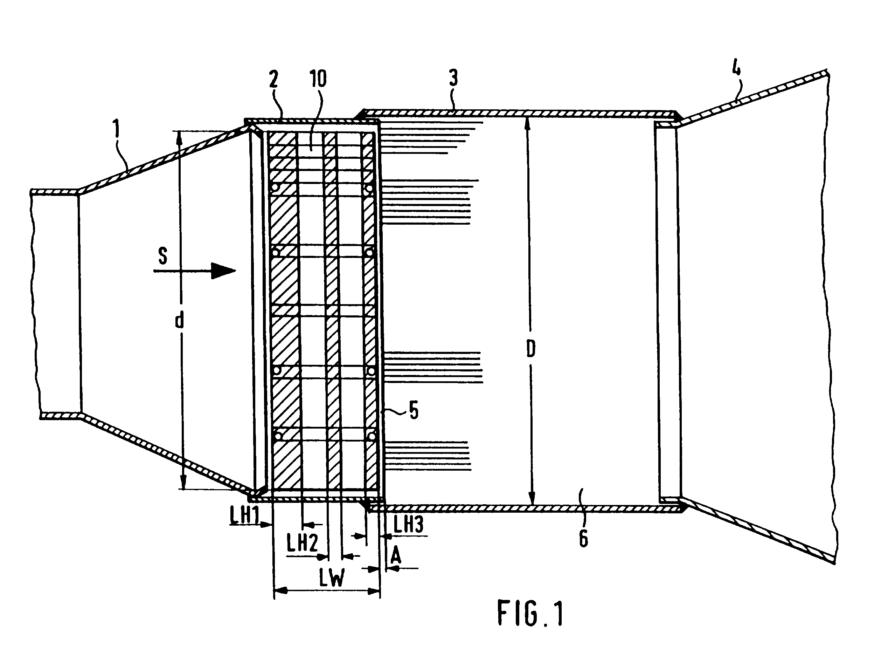

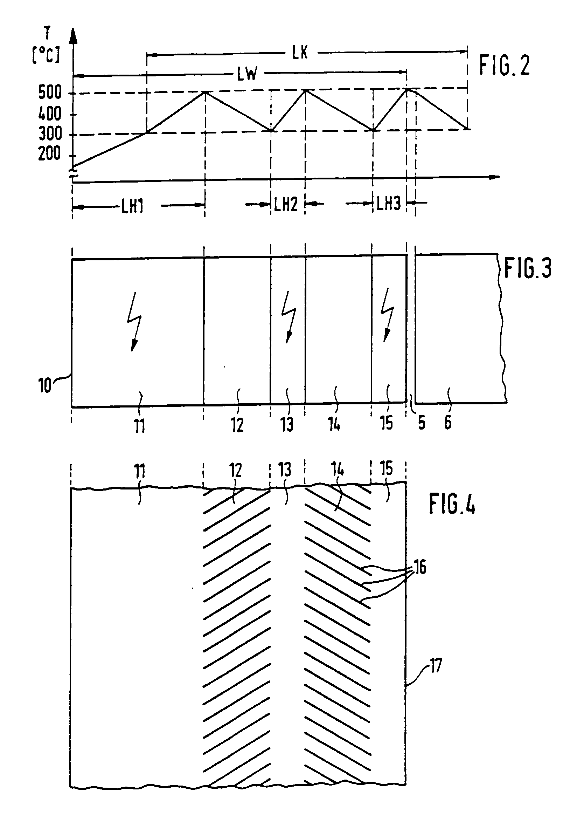

Fig. 1 zeigt im schematischen Längsschnitt einen Ausschnitt aus dem Abgassystem eines Kraftfahrzeuges, und zwar eine in Teilbereichen elektrisch beheizbare Wabenkörperanordnung 10 unmittelbar vor einem Vorkatalysator 6. Über einen Einströmdiffusor 1 gelangt Abgas in der Strömungsrichtung S zu der Wabenkörperanordnung 10, welche in einem Gehäuse 2 untergebracht ist. In einem daran anschließenden Gehäuse 3 ist ein Vorkatalysator 6 angeordnet, wobei zwischen der Wabenkörperanordnung 10 und dem Vorkatalysator 6 nur ein sehr kleiner Spalt der Breite A vorhanden ist. An den Vorkatalysator 6 schließt sich ein Difusor 4 an, hinter welchem der nicht dargestellte Hauptkatalysator liegt. Die Wabenkörperanordnung 10 hat den Durchmesser d und der Vorkatalysator 6 den Durchmesser D. Die axiale Länge LW der Wabenkörperanordnung 10 und die axialen Längen LH1, LH2 und LH3 der beheizbaren Teilbereiche sind in Fig. 3 in axialer Richtung gespreitzt nochmals veranschaulicht.

Fig. 3 zeigt die Wabenkörperanordnung 10 im schematischen Längsschnitt, wobei diese einen ersten elektrisch beheizbaren Teilbereich 11, einen darauf folgenden nicht beheizbaren Teilbereich 12, einen anschließenden wieder elektrisch beheizbaren Teilbereich 13, einen darauffolgenden nicht beheizbaren Teilbereich 14 und wiederum einen elektrisch beheizbaren Teilbereich 15 aufweist. Einfachere erfindungsgemäße Anordnungen können jedoch auch aus weniger Teilbereichen entsprechender Anordnung bestehen, wobei die Wabenkörperanordnung als vorderste Scheibe sowohl einen nicht beheizbaren wie einen beheizbaren Teilbereich haben kann. Bevorzugt wird jedoch ein beheizbarer Teilbereich als vorderste Scheibe.

Fig. 2 veranschaulicht in räumlicher Beziehung zu Fig. 3 den Temperaturverlauf in der Wabenkörperanordnung 10 während einer Kaltstartphase, in der die elektrisch beheizbaren Teilbereiche beheizt werden. Kaltes Abgas strömt den Teilbereich 11 mit einer Temperatur von beispielsweise 150° C an und wird zunächst auf 300° C aufgeheizt. Bei dieser Temperatur setzt eine exotherme katalytische Umsetzung ein, so daß die weitere Aufheizung sowohl durch elektrische wie auch chemische Energie erfolgt, so daß der folgende Temperaturanstieg bis etwa 500° C etwas steiler ist. Im anschließenden nicht beheizbaren Teilbereich 12 fällt die Temperatur dann von 500 auf 300° C ab, liegt jedoch oberhalb der für die katalytische Umsetzung notwendigen Temperatur, so daß im gesamten Teilbereich 12 eine katalytische Umsetzung stattfindet. Der elektrisch beheizbare Teilbereich 13 hebt die Temperatur wieder auf 500° C an, während sie im nachfolgenden nicht beheizbaren Teilbereich 14 wiederum auf ca. 300° C absinkt. Der elektrisch beheizbare Teilbereich 15 hebt die Temperatur wieder auf 500° C an, die dann im Spalt 5 und im anschließenden Vorkatalysator 6 wieder auf 300° C abfällt. Eine katalytische Umsetzung findet dabei auf der gesamten Länge LK statt, d. h. etwa von der Mitte des ersten elektrisch beheizbaren Teilbereiches 11 bis in den Vorkatalysator 6 hinein. Die gesamte elektrisch beheizbare Länge LH setzt sich zusammen aus den drei Längen LH1, LH2 und LH3 der beheizbaren Teilbereiche 11, 13, 15. Wie man erkennen kann, ist die Länge LW des Wabenkörpers in gewissen Grenzen unabhängig von der Gesamtlänge LH der beheizbaren Bereiche. Außerdem ist die Länge LK, auf der eine katalytische Umsetzung stattfindet größer als die Gesamtlänge LH der beheizbaren Bereiche.

Fig. 4 zeigt in räumlicher Beziehung zu Fig. 3 den prinzipiellen Aufbau eines Blechstreifens 17 mit Schlitzen 16, wie er geeignet ist, um eine Wabenkörperanordnung 10 entsprechend der Bauform der WO 92/02714, auf die hier vollinhaltlich Bezug genommen wird, herzustellen. Wird eine Spannung an die nicht dargestellten Enden des Blechstreifens 17 angelegt, so fließt der Strom praktisch nur in den Bereichen 11, 13 und 15, nicht jedoch in den Bereichen 12 und 14, da dort die Schlitze einen nennenswerten Stromfluß verhindern. Die Folie 17 kann sowohl eine glatte wie auch eine gewellte Folie sein. Die genaue Form und Anordnung der Schlitze 16 ist nicht von entscheidender Bedeutung, so lange sie nur in ihrer Gesamtheit einen Stromfluß quer zur Strömungsrichtung in den Bereichen 12 und 14 verhindern.

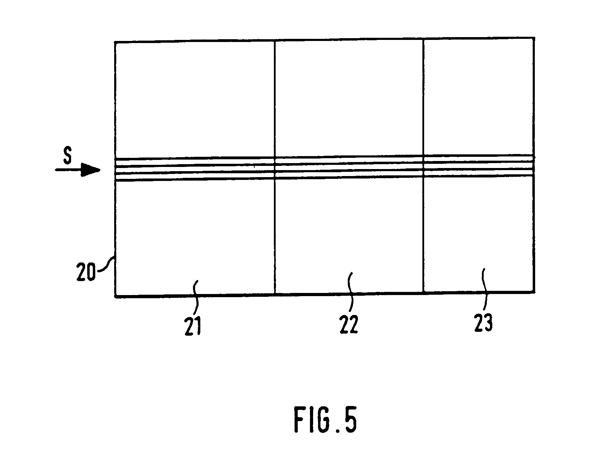

Fig. 5 zeigt in schematischer Form den Aufbau einer extrudierten Wabenkörperanordnung 20 mit einem elektrisch beheizbaren ersten Teilbereich 21, einen nicht elektrisch beheizbaren Teilbereich 22 und einem elektrisch beheizbaren Teilbereich 23. Der Teilbereich 21 weist einen hohen Metallanteil auf, während der Bereich 22 einen höheren keramischen Anteil aufweist. Grundsätzlich kann bei extrudierten Wabenkörpern auch ein in Strömungsrichtung kontinuierlich zunehmender elektrischer Widerstand durch entsprechende Änderung der Mischung von Metall- und Keramikteilen beim Extrudieren erreicht werden, wodurch die erfindungsgemäße Aufgabe ebenfalls in besonders günstiger Weise gelöst wird.

Die nachfolgende Tabelle zeigt, auf welche Weise erfindungsgemäße Wabenkörperanordnungen standardisiert werden können und wie breit die zulässigen Bereiche für die verschiedenen Parameter sind. Die Tabelle bezieht sich auf Bauformen gemäß der WO 92/02714 und zeigt in den Spalten nebeneinander Bautypten für die elektrischen Leistungen 750 W, 1000 W, 1500 W, 2000 W bzw. 3000 W. In den Reihen untereinander sind drei verschiedene Durchmesser der Wabenkörperanordnung, nämlich 76 mm, 86 mm, 96 mm, zugehörig zu den entsprechenden Durchmessern von Vorkatalysatoren von 80 mm, 90 mm bzw. 100 mm angegeben.

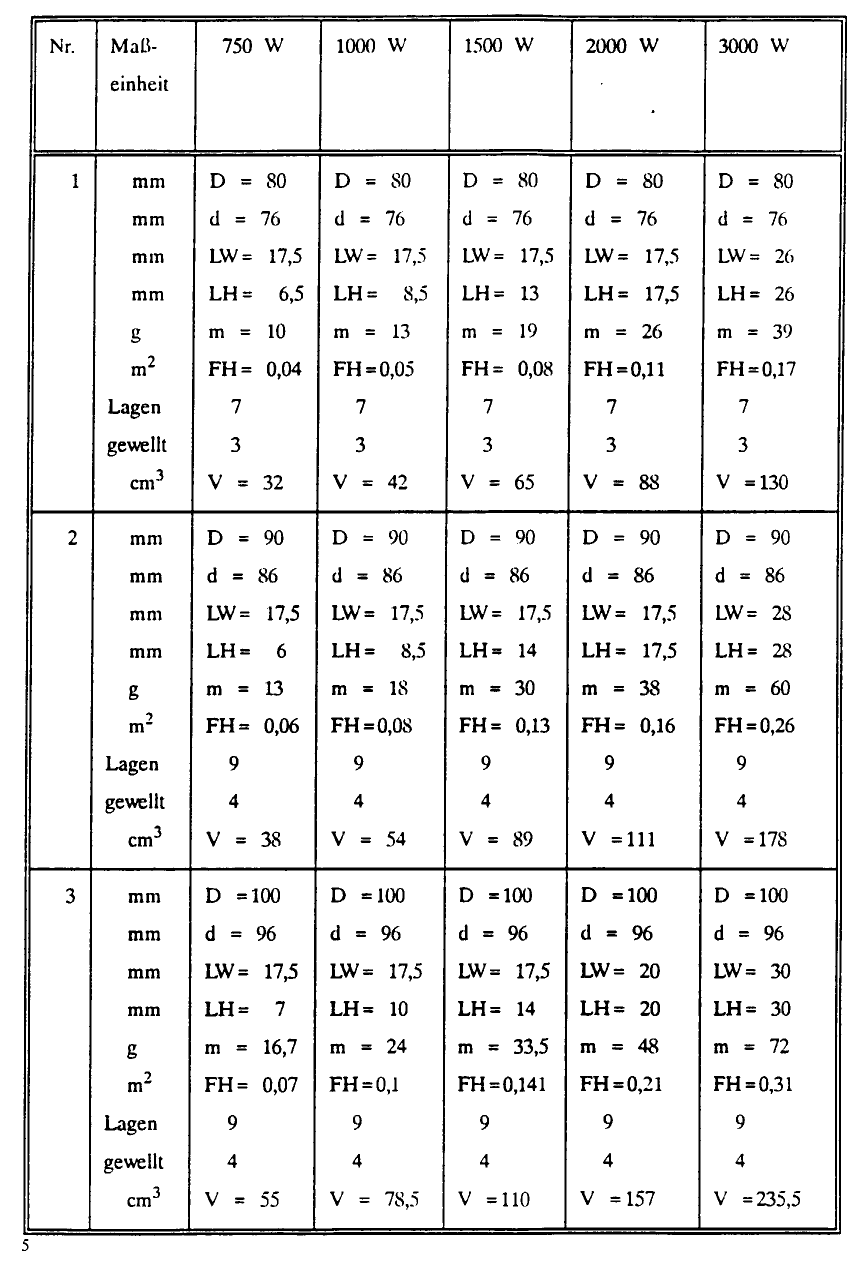

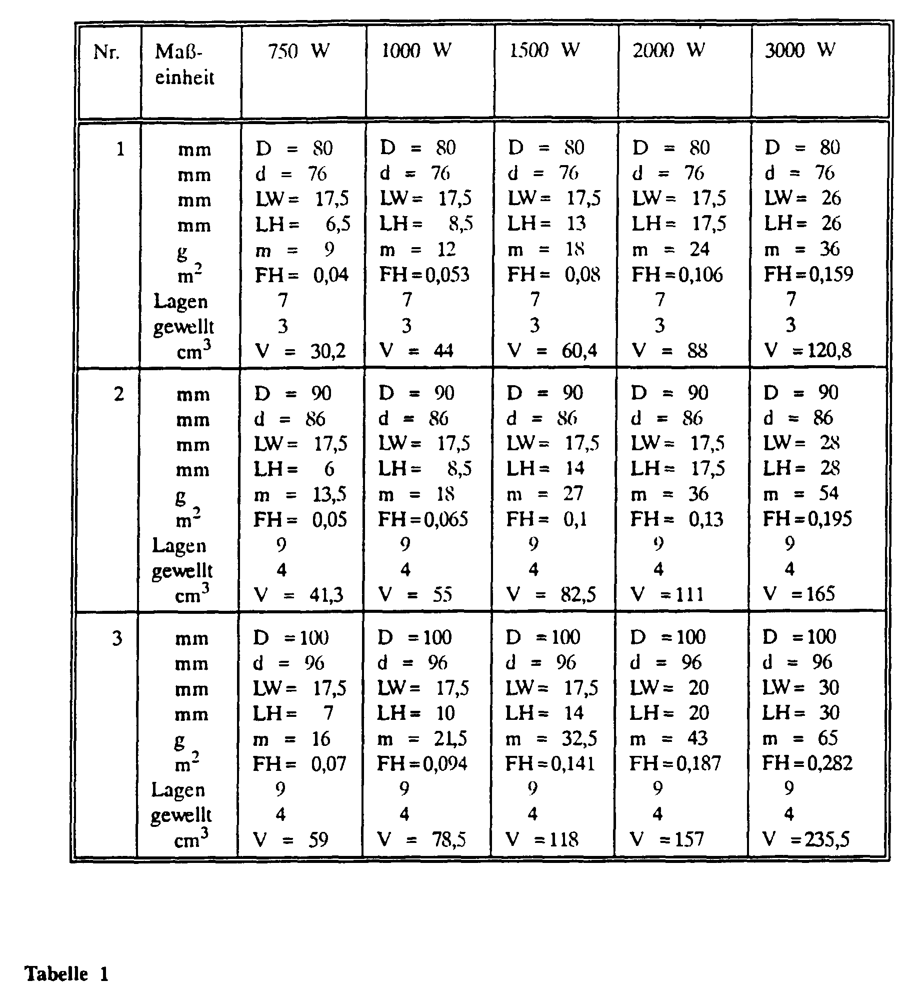

Desweiteren bedeuten:
- LW: Länge der Wabenkörperanordnung
- LH: Axiale Gesamtlänge der beheizten Bereiche
- m: Masse
- FH: Beheizbare Fläche
- V: Volumen.

Außerdem ist angegeben, aus wievielen miteinander verschlungenen Lagen ein solcher Wabenkörper aufgebaut ist, und wieviele dieser Lagen gewellt sind. Typischerweise werden für die Blechlagen hochtemperatur-korrosionsfeste Bleche aus Eisenchromaluminiumlegierungen eingesetzt mit einer Dicke von 0,04 bis 0,1 mm. Wie aus der Tabelle zu erkennen ist, eignen sich die erfindungsgemäßen Wabenkörper insbesondere für die unteren elektrischen Leistungshereiche von 750 W, 1000 W oder 1500 W. Für die höheren Leistungen kann die Standardisierung dadurch fortgesetzt werden, daß der gesamte Wabenkörper elektrisch beheizt wird (also nicht mehr in Teilbereiche unterteilt ist) und gegebenenfalls seine axiale Lange vergrößert wird. Gerade für die unteren Leistungsbereiche ergibt sich jedoch die Möglichkeit bei Standard-Durhmessern und Standard-Längen der Wabenkörperanordnung günstige Eigenschaften bezüglich der Aufheizzeit in der Kaltstartphase zu erreichen.

## Patentansprüche

1. Katalytischer Konverter mit elektrischer Beheizung, umfassend ein Gehäuse (1, 2, 3, 4), in welchem mindestens ein von einem Abgas eines Verbrennungsmotors in einer Strömungsrichtung (S) durchströmbarer Wabenkörper (10; 20) enthalten ist, der zumindest in Teilbereichen (11, 13, 15) elektrisch leitfähig und durch einen elektrischen Strom beheizbar ist und der zumindest in Teilbereichen eine katalytisch aktive Beschichtung aufweist,
dadurch gekennzeichnet,
daß der Wabenkörper (10; 20) mindestens zwei in Durchströmungsrichtung (S) hintereinander liegende elektrisch beheizbare Teilbereiche (11, 13, 15; 21, 23) mit unterschiedlicher axialer Länge (LH1, LH2, LH3) und/oder unterschiedlichem elektrischen Widerstand aufweist, welche voneinander durch einen für den elektrischen Stom zumindest nahezu gesperrten Teilbereich (12, 14; 22) des Wabenkörpers (10; 20) getrennt sind.

2. Katalytischer Konverter nach Anspruch 1, dadurch gekennzeichnet, daß die Sperrung durch eine Vielzahl von etwa quer oder schräg zur Richtung des elektrischen Stromes verlaufende Schlitze (16) gebildet ist.

3. Katalytischer Konverter nach Anspruch 1 oder 2, dadurch gekennzeichnet, daß der erste elektrisch beheizbare Teilbereich (11; 21) eine größere axiale Länge (LH1) als der zweite elektrisch beheizbare Teilbereich (13; 23) aufweist, vorzugsweise die zwei- bis vierfache Länge.

4. Katalytischer Konverter nach Anspruch 1, 2 oder 3, dadurch gekennzeichnet, daß der zweite elektrisch beheizbare Teilbereich (13; 23) einen größeren elektrischen Widerstand aufweist als der erste elektrisch beheizbare Teilbereich (11; 21), vorzugsweise einen zwei- bis vierfachen Widerstand.

5. Katalytischer Konverter nach einem der vorhergehenden Ansprüche, dadurch gekennzeichnet, daß der zwischen den elektrisch beheizbaren Teilbereichen (11, 13, 15; 21, 23) liegende für den elektrischen Stom gesperrte Teilbereich (12, 14; 22) mit katalytisch aktiver Beschichtung versehen ist..

6. Katalytischer Konverter nach einem der vorhergehenden Ansprüche, dadurch gekennzeichnet, daß der erste elektrisch beheizbare Teilbereich (11; 21) bezüglich seiner axialen Länge (LH1), seines elektrischen Widerstandes, seiner Masse und seiner Oberfläche so gestaltet ist, daß er bei einer vorgegebenen Versorgungsspannung, beispielsweise 8 bis 12 Volt, im Abgasstrom des Verbrennungsmotors während einer Kaltstartphase innerhalb von 3 bis 15 sec auf etwa 450° C aufgeheizt wird.

7. Katalytischer Konverter nach Anspruch 5, dadurch gekennzeichnet, daß der in Strömungsrichtung (S) hinter dem ersten elektrisch beheizbaren Teilbereich (11; 21) liegende nicht direkt beheizbare Teilbereich (12; 22) mit katalytisch aktiver Beschichtung eine solche axiale Länge, Masse und Oberfläche aufweist, daß der Temperaturabfall während einer Kaltstartphase des Verbrennungsmotors über seine axiale Länge unter Berücksichtigung von exothermen Reaktionen in diesem Teilbereich (12; 22) nur etwa 50 bis 100° C bei einer Eintrittstemperatur von 450° C ist.

8. Katalytischer Konverter nach einem der vorhergehenden Ansprüche, dadurch gekennzeichnet, daß der zweite elektrisch beheizbare Teilbereich (13; 23) bezüglich seiner axialen Länge (LH2), seines elektrischen Widerstandes, seiner Masse und seiner Oberfläche so gestaltet ist, daß er bei einer vorgegebenen Versorgungsspannung während einer Kaltstartphase des Verbrennungsmotors bei einer Eintrittstemperatur von 400° C unter Berücksichtigung von exothermen Reaktionen in diesem Teilbereich eine Temperaturerhöhung von 50 bis 100° C bewirkt.

9. Katalytischer Konverter nach einem der Ansprüche 5 oder 7, dadurch gekennzeichnet, daß in Strömungsrichtung (S) mindestens ein weiterer für den elektrischen Strom gesperrter Teilbereich (14) mit katalytisch aktiver Beschichtung folgt.

10. Katalytischer Konverter nach Anspruch 9, dadurch gekennzeichnet, daß in Strömungsrichtung (S) mindestens ein weiterer elektrisch beheizbarer Teilbereich (15) folgt.

11. Katalytischer Konverter nach einem der vorhergehenden Ansprüche, dadurch gekennzeichnet, daß der ganze Wabenkörper (10; 20) mit katalytisch aktivem Material beschichtet ist.

12. Katalytischer Konverter nach einem der vorhergehenden Ansprüche, dadurch gekennzeichnet, daß der Wabenkörper (10; 20) aus strukturierten Blechlagen (17) zusammengesetzt und in mindestens drei axial hintereinander liegende Teilbereiche (11, 12, 13, 14, 15) unterteilt ist, nämlich einen ersten elektrisch beheizbaren Teilbereich (11), einen daran anschließenden durch eine Vielzahl von Schlitzen (16) in den Blechlagen (17) elektrisch zumindest in einer Richtung nicht durchgehend leitenden und daher nicht direkt beheizbaren Teilbereich (12) und einen daran anschließenden zweiten elektrisch beheizbaren Teilbereich (13).

13. Katalytischer Konverter nach Anspruch 12, dadurch gekennzeichnet, daß die Schlitze (16) etwa in Strömungsrichtung (S) oder im spitzen Winkel dazu verlaufen und einen elektrischen Stromfluß quer zur Strömungsrichtung (S) in dem nicht direkt beheizbaren Teilbereich (12) verhindern, wobei jedoch die axiale Stabilität des Teilbereiches (12) erhalten bleibt, so daß der erste (11) und zweite (12) beheizbare Teilbereich durch diesen nicht direkt beheizbaren Teilbereich axial stabil miteinander verbunden sind und der ganze Körper (10) auch bei axial sehr kurzen elektrisch beheizbaren Teilbereichen (11, 13) eine hohe axiale mechanische Festigkeit aufweist.

14. Katalytischer Konverter nach einem der vorhergehenden Ansprüche, dadurch gekennzeichnet, daß die axiale Länge (LH1, LH2, LH3) aller elektrisch beheizbaren Bereiche zusammen zwischen 4 und 20 mm ist, vorzugsweise 6 bis 16 mm.

15. Katalytischer Konverter nach einem der vorhergehenden Ansprüche, dadurch gekennzeichnet, daß die axiale Länge (LH1) des ersten elektrisch beheizbaren Teilbereiches (11) 2 bis 10 mm ist, vorzugsweise etwa 6 mm.

16. Katalytischer Konverter nach einem der vorhergehenden Ansprüche, dadurch gekennzeichnet, daß der Durchmesser (d) des Wabenkörpers (10, 20) 75 bis 105 mm beträgt, vorzugsweise etwa 90 mm.

17. Katalytischer Konverter nach einem der vorhergehenden Ansprüche, dadurch gekennzeichnet, daß die axiale Gesamtlänge (LW) des Wabenkörpers (10; 20) 12 bis 40 mm ist, vorzugsweise etwa 25 mm.

18. Katalytischer Konverter nach einem der Ansprüche 1 oder 3 bis 11, dadurch gekennzeichnet, daß der Wabenkörper (20) ein extrudierter Körper ist und mindestens drei axial hintereinander liegende Teilbereiche (21, 22, 23) aufweist, nämlich einen ersten elektrisch leitfähigen und beheizbaren Teilbereich (21), einen daran anschließenden elektrisch schlecht leitfähigen und daher nicht direkt beheizbaren Teilbereich (22) und einen daran anschließenden zweiten elektrisch leitfähigen und beheizbaren Teilbereich (23).

19. Katalytischer Konverter nach Anspruch 18, dadurch gekennzeichnet, daß der extrudierte Wabenkörper (20) in den gut leitenden Teilbereichen (21, 23) vorwiegend aus metallischem Material und in den schlecht leitenden Bereichen (22) vorwiegend aus keramischem Material oder metallischem Material hoher Porösität besteht.

20. Katalytischer Konverter nach einem der Ansprüche 17 bis 19, dadurch gekennzeichnet, daß der Wabenkörper (20) drei beheizbare und zwei nicht direkt beheizbare Teilbereiche aufweist.

21. Katalytischer Konverter nach einem der Ansprüche 17 bis 19, dadurch gekennzeichnet, daß der Wabenkörper (20) zwei beheizbare und drei nicht direkt beheizbare Teilbereiche aufweist.

## Claims

1. A catalytic converter with electrical heating, including a casing (1, 2, 3) in which there is contained at least one honeycomb body (10; 20) through which an exhaust gas of an internal combustion engine can flow in a flow direction (S) and which at least in portions (11, 13, 15) is electrically conductive and is heatable by an electric current and which at least in portions has a catalytically active coating, characterised in that the honeycomb body (10; 20) has at least two electrically heatable portions (11, 13, 15; 21, 23) of different axial lengths (LH1, LH2, LH3) and/or of different electrical resistances, which are disposed in succession in the through-flow direction (S) and which are separated from each other by a portion (12, 14; 22) of the honeycomb body (10; 20), which is at least almost blocked in respect of the electric current.

2. A catalytic converter according to claim 1 characterised in that the blocking is formed by a plurality of slots (16) which extend approximately transversely or inclinedly relative to the direction of the electric current.

3. A catalytic converter according to claim 1 or claim 2 characterised in that the first electrically heatable portion (11; 21) is of greater axial length (LH1) than the second electrically heatable portion (13; 23), preferably twice to four times the length.

4. A catalytic converter according to claim 1, claim 2 or claim 3 characterised in that the second electrically heatable portion (13; 23) is of greater electrical resistance than the first electrically heatable portion (11; 21), preferably a resistance which is twice to four times.

5. A catalytic converter according to one of the preceding claims characterised in that the portion (12, 14; 22) which is disposed between the electrically heatable portions (11, 13, 15; 21, 23) and which is blocked in respect of the electric current is provided with catalytically active coating.

6. A catalytic converter according to one of the preceding claims characterised in that the first electrically heatable portion (11; 21) is of such a nature in relation to its axial length (LH1), its electrical resistance, its mass and its surface area that it is heated up in the exhaust gas flow of the internal combustion engine during a cold start phase to about 450°C within 3 to 15 seconds with a predetermined supply voltage, for example 8 to 12 volts.

7. A catalytic converter according to claim 5 characterised in that the portion (12; 22) with catalytically active coating, which is not directly heatable and which in the flow direction (S) is downstream of the first electrically heatable portion (11; 21), is of such an axial length, mass and surface area that the temperature drop during a cold start phase of the internal combustion engine over its axial length, having regard to exothermic reactions in that portion (12; 22), is only about 50 to 100°C with an intake temperature of 450°C.

8. A catalytic converter according to one of the preceding claims characterised in that the second electrically heatable portion (13; 23) is of such a nature in relation to its axial length (LH2), its electrical resistance, its mass and its surface area that it produces a temperature increase of 50 to 100°C with a predetermined supply voltage during a cold start phase of the internal combustion engine with an intake temperature of 400°C, having regard to exothermic reactions in that portion.

9. A catalytic converter according to one of claims 5 and 7 characterised in that following in the flow direction (S) is at least one further portion (14) with catalytically active coating, which is blocked in respect of the electric current.

10. A catalytic converter according to claim 9 characterised in that following in the flow direction (S) is at least one further electrically heatable portion (15).

11. A catalytic converter according to one of the preceding claims characterised in that the entire honeycomb body (10; 20) is coated with catalytically active material.

12. A catalytic converter according to one of the preceding claims characterised in that the honeycomb body (10; 20) is composed of structured sheet metal layers and is subdivided into at least three axially successively disposed portions (11, 12, 13, 14, 15), namely a first electrically heatable portion (11), a portion (12) which adjoins sane and which by virtue of a plurality of slots (16) in the sheet metal layers (17) is electrically not continuously conductive at least in one direction and is therefore not directly heatable, and a second electrically heatable portion (13) adjoining same.

13. A catalytic converter according to claim 12 characterised in that the slots (16) extend approximately in the flow direction (S) or at an acute angle thereto and prevent an electrical flow of current transversely to the flow direction (S) in the portion (12) which is not directly heatable, but in which the axial stability of the portion (12) is retained so that the first (11) and second (12) heatable portions are axially stably connected together by said portion which is not directly heatable, and the entire body (10) has a high level of axial mechanical strength even with axially very short electrically heatable portions (11, 13).

14. A catalytic converter according to one of the preceding claims characterised in that the axial length (LH1, LH2, LH3) of all electrically heatable regions is together between 4 and 20 mn, preferably 6 to 16 mn.

15. A catalytic converter according to one of the preceding claims characterised in that the axial length (LH1) of the first electrically heatable portion (11) is 2 to 10 mn, preferably about 6 mm.

16. A catalytic converter according to one of the preceding claims characterised in that the diameter (d) of the honeycomb body (10, 20) is 75 to 105 mm, preferably about 90 mm.

17. A catalytic converter according to one of the preceding claims characterised in that the overall axial length (LW) of the honeycomb body (10; 20) is 12 to 40 mm, preferably about 25 mm.

18. A catalytic converter according to one of claims 1 or 3 to 11 characterised in that the honeycomb body (20) is an extruded body and has at least three axially successively disposed portions (21, 22, 23), namely a first electrically conductive and heatable portion (21), a portion (22) which adjoins same and which is electrically poorly conductive and therefore not directly heatable and a second electrically conductive and heatable portion (23) which adjoins same.

19. A catalytic converter according to claim 18 characterised in that the extruded honeycomb body (20) in the portions (21, 23) which are good conductors predominantly comprises metallic material while in the regions (22) which are poor conductors it predominantly comprises ceramic material or metallic material of high porosity.

20. A catalytic converter according to one of claims 17 to 19 characterised in that the honeycomb body (20) has three heatable portions and two portions which are not directly heatable.

21. A catalytic converter according to one of claims 17 to 19 characterised in that the honeycomb body (20) has two heatable portions and three portions which are not directly heatable.

## Revendications

1. Convertisseur catalytique chauffé électriquement, comprenant un carter (1, 2, 3, 4) contenant au moins un corps cellulaire (10 ; 20) qui peut être parcouru dans une direction d'écoulement (S) par des gaz d'échappement d'un moteur à combustion interne, qui, au moins dans des zones partielles (11, 13, 15), est conducteur d'électricité et susceptible d'être chauffé par un courant électrique et qui, au moins dans des zones partielles, comporte un revêtement à action catalytique, caractérisé en ce que le corps cellulaire (10 ; 20) comprend au moins deux zones partielles chauffées électriquement (11, 13, 15 ; 21, 23) qui sont disposées l'une derrière l'autre dans la direction de passage (S) et possèdent des longueurs axiales (LH1, LH2, LH3) différentes et/ou des résistances électriques différentes et qui sont séparées l'une de l'autre par une zone partielle (12, 14 ; 22) du corps cellulaire (10 ; 20) qui est au moins presque entièrement inaccessible au courant électrique.

2. Convertisseur catalytique selon la revendication 1, caractérisé en ce que le barrage est formé par une pluralité de fentes (16) s'étendant sensiblement transversalement ou en biais par rapport à la direction du courant électrique.

3. Convertisseur catalytique selon la revendication 1 ou 2, caractérisé en ce que la première zone partielle chauffée électriquement (11 ; 21) possède une longueur axiale (LH1) supérieure, de préférence de deux à quatre fois, à celle de la deuxième zone partielle chauffée électriquement (13 ; 23).

4. Convertisseur catalytique selon la revendication 1, 2 ou 3, caractérisé en ce que la deuxième zone partielle chauffée électriquement (13 ; 23) possède une résistance électrique supérieure, de préférence de deux à quatre fois, à celle de la première zone partielle chauffée électriquement (11 ; 21).

5. Convertisseur catalytique selon l'une des revendications précédentes, caractérisé en ce que la zone partielle (12, 14 ; 22) inaccessible au courant électrique et située entre les zones partielles chauffées électriquement (11, 13, 15 ; 21, 23) est garnie d'un revêtement à action catalytique.

6. Convertisseur catalytique selon l'une des revendications précédentes, caractérisé en ce que la première zone partielle chauffée électriquement (11 ; 21) est conçue, sur le plan de sa longueur axiale (LH1), de sa résistance électrique, de sa masse et de sa superficie, de façon qu'en présence d'une tension d'alimentation prédéfinie, par exemple de 8 à 12 volts, elle soit portée à environ 450 °C en l'espace de 3 à 15 secondes dans le courant de gaz d'échappement du moteur à combustion interne lors d'une phase de démarrage à froid.

7. Convertisseur catalytique selon la revendication 5, caractérisé en ce que la zone partielle non directement chauffée (12 ; 22) avec revêtement à action catalytique, située derrière la première zone partielle chauffée électriquement (11 ; 21) dans la direction d'écoulement (S), possède une longueur axiale, une masse et une superficie telles que la chute de température au cours de la phase de démarrage à froid du moteur à combustion interne sur sa longueur axiale n'est, compte tenu des réactions exothermiques dans cette zone partielle (12 ; 22), que d'environ 50 à 100 °C pour une température d'entrée de 450 °C.

8. Convertisseur catalytique selon l'une des revendications précédentes, caractérisé en ce que, sur le plan de sa longueur axiale (LH2), de sa résistance électrique, de sa masse et de sa superficie, la deuxième zone partielle chauffée électriquement (13 ; 23) est conçue de façon à réaliser une élévation de température de 50 à 100 °C en présence d'une tension d'alimentation prédéfinie au cours d'une phase de démarrage à froid du moteur à combustion interne, avec une température d'entrée de 400 °C, compte tenu des réactions exothermiques dans cette zone partielle.

9. Convertisseur catalytique selon l'une des revendications 5 ou 7, caractérisé en ce qu'il est prévu à la suite, dans la direction d'écoulement (S), au moins une autre zone partielle (14) inaccessible au courant électrique et garnie d'un revêtement à action catalytique.

10. Convertisseur catalytique selon la revendication 9, caractérisé en ce qu'il est prévu, à la suite, dans la direction d'écoulement (S), au moins une autre zone partielle chauffée électriquement (15).

11. Convertisseur catalytique selon l'une des revendications précédentes, caractérisé en ce que le corps cellulaire (10 ; 20) est revêtu en totalité de matériau à action catalytique.

12. Convertisseur catalytique selon l'une des revendications précédentes, caractérisé en ce que le corps cellulaire (10 ; 20) est composé de couches de tôles structurées (17) et est divisé en au moins trois zones partielles (11, 12, 13, 14, 15) se succédant axialement, à savoir une première zone partielle chauffée électriquement (11), immédiatement à sa suite une zone partielle (12) qui ne présente pas de conductivité électrique continue au moins dans une direction en raison d'une pluralité de fentes (16) pratiquées dans les couches de tôle (17) et qui n'est donc pas chauffée directement et, à la suite de celle-ci, une deuxième zone partielle chauffée électriquement (13).

13. Convertisseur catalytique selon la revendication 12, caractérisé en ce que les fentes (16) s'étendent sensiblement dans la direction d'écoulement (S) ou à angle aigu par rapport à celle-ci et interdisent toute conduction de courant électrique transversalement à la direction d'écoulement (S) dans la zone partielle non directement chauffée (12), la stabilité axiale de la zone partielle (12) restant toutefois préservée, de sorte que les première (11) et deuxième (13) zones partielles chauffées sont solidarisées axialement de manière stable par ladite zone partielle non directement chauffée, et l'ensemble du corps (10) présente une résistance mécanique axiale élevée, même lorsque les zones partielles chauffées électriquement (11, 13) sont axialement très courtes.

14. Convertisseur catalytique selon l'une des revendications précédentes, caractérisé en ce que la longueur axiale (LH1, LH2, LH3) de toutes les zones chauffées électriquement est comprise entre 4 et 20 mm, de préférence entre 6 et 16 mm.

15. Convertisseur catalytique selon l'une des revendications précédentes, caractérisé en ce que la longueur axiale (LH1) de la première zone partielle chauffée électriquement (11) est comprise entre 2 et 10 mm et, de préférence, égale à environ 6 mm.

16. Convertisseur catalytique selon l'une des revendications précédentes, caractérisé en ce que le diamètre (d) du corps cellulaire (10, 20) est compris entre 75 et 105 mm et, de préférence, égal à environ 90 mm.

17. Convertisseur catalytique selon l'une des revendications précédentes, caractérisé en ce que la longueur axiale totale (LW) du corps cellulaire (10 ; 20) est comprise entre 12 et 40 mm et, de préférence, égale à environ 25 mm.

18. Convertisseur catalytique selon l'une des revendications 1 ou 3 à 11, caractérisé en ce que le corps cellulaire (20) est un corps extrudé et comporte au moins trois zones partielles (21, 22, 23) qui se succèdent axialement, à savoir une première zone partielle (21) conductrice d'électricité et chauffée, à sa suite une zone partielle (22) à mauvaise conductivité électrique et donc non directement chauffée et, à la suite de celle-ci, une deuxième zone partielle (23) conductrice d'électricité et chauffée.

19. Convertisseur catalytique selon la revendication 18, caractérisé en ce que le corps cellulaire extrudé (20) est constitué, dans les zones partielles à bonne conductivité (21, 23), principalement de matériau métallique et, dans les zones à mauvaise conductivité (22), principalement de matériau céramique ou de matériau métallique à porosité élevée.

20. Convertisseur catalytique selon l'une des revendications 17 à 19, caractérisé en ce que le corps cellulaire (20) comporte trois zones partielles chauffées et deux zones partielles non directement chauffées.

21. Convertisseur catalytique selon l'une des revendications 17 à 19, caractérisé en ce que le corps cellulaire (20) comporte deux zones partielles chauffées et trois zones partielles non directement chauffées.
